# EUROPEAN PATENT SPECIFICATION

(11) **EP 3 403 884 B1**
(45) Date of publication and mention of the grant of the patent: **25.09.2019**
(21) Application number: 17199905.5
(22) Date of filing: 03.11.2017
(51) Int. Cl.: C08L 23/14, B60R 13/04, B29C 45/14, B29L 31/30, B32B 5/02, B29K 23/00, B32B 27/08

(54) **POLYPROPYLENE COMPLEX RESIN COMPOSITION FOR LOW-TEMPERATURE INJECTION MOLDING**
POLYPROPYLENKOMPLEXHARZZUSAMMENSETZUNG FÜR NIEDRIGTEMPERATUR-SPRITZGIESSEN
COMPOSITION DE RÉSINE COMPLEXE DE POLYPROPYLÈNE POUR MOULAGE PAR INJECTION À BASSE TEMPÉRATURE

(30) Priority: 16.05.2017 KR 20170060424
(43) Date of publication of application: 21.11.2018
(73) Proprietor: Hyundai Motor Company, Seoul 06797 (KR); Kia Motors Corporation, Seoul 06797 (KR); Hyundai EP Co., Ltd., Chungcheongnam-do 31703 (KR)
(72) Inventor: KIM, Hak Soo, 18280 Hwaseong-si, Gyeonggi-do (KR); LEE, Han Ki, 18280 Hwaseong-si, Gyeonggi-do (KR); KIM, Yong Ho, 18280 Hwaseong-si, Gyeonggi-do (KR); KIM, Dae Sik, 18280 Hwaseong-si, Gyeonggi-do (KR); BAK, Mun Gyu, 18280 Hwaseong-si, Gyeonggi-do (KR); PARK, Ju Seong, 18280 Hwaseong-si, Gyeonggi-do (KR); KIM, Beom Ho, 18280 Hwaseong-si, Gyeonggi-do (KR); LEE, Hyeok, 18280 Hwaseong-si, Gyeonggi-do (KR); CHOI, Hoi Jin, 18280 Hwaseong-si, Gyeonggi-do (KR)
(74) Representative: Viering, Jentschura & Partner mbB Patent- und Rechtsanwälte

(56) References cited:
- EP-A1- 2 031 018
- US-A1- 2003 229 169
- US-A1- 2014 135 440

## Description

### BACKGROUND OF THE INVENTION

### Field of the Invention

The present invention relates to a polypropylene complex resin composition for low temperature injection molding, which has a melt flow index (MI) value of about 20 to 30 g/10 min measured at 200°C and under a load condition of 2.16 kg, and a spiral flow value of about 500 to 800 mm in accordance with a 200°C injection reference.

### Description of Related art

General interior parts for a vehicle include a door trim, a filler, a trunk mat, a package trim, a headliner, and the like. With the trend of automobile consumers' desired quality, skin fabric is applied to the surface of the interior part for the purpose of imparting the soft texture while providing a luxurious image. As the skin fabric, non-woven fabric, textile fabric or fabric formed of a thermoplastic resin material has been used.

Examples of a method of applying skin fabric to interior parts include a material wrapping method, a vacuum molding method, a powder slush molding (PSM) process, a pre-forming IMG process, and the like. The wrapping method of interior parts may incur an increase in costs due to addition of production processes and materials, and may incur an indoor air quality problem caused by volatile organic compounds (VOCs) by using volatile organic solvents and adhesives. The vacuum molding method is a process in which skin fabric is subjected to vacuum suction and molded, and then integral molding is performed by combining an upper mold and a lower mold. However, the vacuum molding method has a problem in that in the deep drawing section while integrally molding, skin fabric burst while being stretched or embossed patterns formed on the surface of the fabric crumble, thereby degrading a surface quality of the interior parts. The PSM process is a process in which skin fabric is positioned in a foaming mold, a base is allowed to settle at the upper side, and then foaming is performed, and the PSM process is slightly trickier to mold the skin fabric than the vacuum molding method, but has an advantage in that it is possible to provide a softer texture than the vacuum molding method. The pre-forming IMG process is a process which allows pre-forming skin fabric and an adhesive-applied base to settle in compression mold, and compresses the mold to attach the skin fabric and the base. However, the pre-forming IMG process is disadvantageous in view of testing VOCs because an adhesive is applied onto a base, and has a problem in that pre-forming fabric cannot be pre-heated, and as a result, the quality deteriorates, such as occurrence of compression defects on flange parts during the compression process or generation of bubbles on the skin fabric.

However, due to the pressure from continuous price reduction and cost reduction, there is a trend to apply a molding process which requires more simplified processes. Studies have been conducted on an integral molding method which is intended to obtain a molded article once by allowing a base and skin fabric to settle in one molding machine as a molding method satisfying these requirements. However, a polypropylene complex resin used as a base has a high injection molding temperature of 215°C to 235°C based on a nozzle, and thus has a problem in that when integral molding is performed by allowing a base and skin fabric to settle in a molding machine, the soft skin fabric degrades, thereby degrading the surface quality of interior parts. Therefore, there is a need for developing a base material capable of being injection molded under low temperature conditions in which soft skin fabric does not degrade.

The information disclosed in this Background of the Invention section is only for enhancement of understanding of the general background of the invention and may not be taken as an acknowledgement or any form of suggestion that this information forms the prior art already known to a person skilled in the art.

### BRIEF SUMMARY

Various aspects of the present invention are directed to providing a new polypropylene complex resin composition capable of being injection-molded under low temperature conditions in which soft skin fabric does not degrade.

That is, the polypropylene complex resin composition provided by the present invention enables injection molding even under a low temperature condition of about 180°C to about 200°C, and thus enables integral molding with soft skin fabric.

The present invention, in various aspects, has also been made in an effort to provide a low-temperature injection molded article which is injection-molded under a low temperature condition of about 180°C to about 200°C.

Various aspects of the present invention are directed to providing a polypropylene complex resin composition for low-temperature injection molding, including (A) a polypropylene resin, (B) an olefin-based elastomer, (C) an inorganic reinforcing agent, and (C) an additive.

In various exemplary embodiments, (A) the polypropylene resin is a polypropylene mixed resin including: about 100 parts by weight of (A-1) which is a high-crystalline ethylene-propylene copolymer having an isotactic index of about 98 to 100% and a melt flow index value of about 20 to 50 g/10 min (2.16 kg, 230°C); and about 5 to 20 parts by weight of (A-2) which is an ultrahigh fluidity homopolypropylene having a melt flow index value of about 1,000 to 1,800 g/10 min (2.16 kg, 230°C).

In anembodiment, the polypropylene complex resin composition for low-temperature injection molding may have a melt flow index (MI) value of about 20 to 30 g/10 min measured at 200°C and under a load condition of 2.16 kg, and a spiral flow value of about 500 to 800 mm in accordance with a 200°C injection reference.

Various aspects of the present invention are directed to providing a molded article manufactured by injection-molding a polypropylene complex resin composition under a low temperature condition of about 180°C to about 200°C.

In various exemplary embodiments, the molded article may be an interior part for a vehicle selected from the group consisting of a door trim, a filler, a trunk mat, a package trim, and a headliner.

A polypropylene complex resin composition provided by the present invention has excellent moldability even under low temperature injection conditions, and provides an excellent appearance quality of a molded article. Accordingly, the polypropylene complex resin composition provided by the present invention has enables integral molding with soft skin fabric, and as a result, it is possible to expect a process simplification effect and a cost reduction effect.

Other aspects and exemplary embodiments of the invention are discussed infra.

It is understood that the term "vehicle" or "vehicular" or other similar term as used herein is inclusive of motor vehicles in general such as passenger automobiles including sports utility vehicles (SUV), buses, trucks, various commercial vehicles, watercraft including a variety of boats and ships, aircraft, and the like, and includes hybrid vehicles, electric vehicles, plug-in hybrid electric vehicles, hydrogen-powered vehicles and other alternative fuel vehicles (e.g. fuels derived from resources other than petroleum). As referred to herein, a hybrid vehicle is a vehicle that has two or more sources of power, for example both gasoline-powered and electric-powered vehicles.

The above and other features of the invention are discussed infra.

The methods and apparatuses of the present invention have other features and advantages which will be apparent from or are set forth in more detail in the accompanying drawings, which are incorporated herein, and the following Detailed Description, which together serve to explain certain principles of the present invention.

### BRIEF DESCRIPTION OF THE DRAWINGS

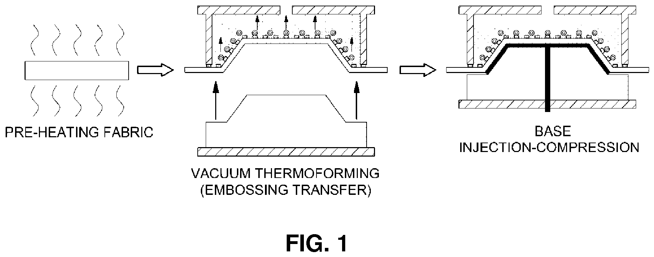

FIG. 1 is a process view illustrating an integral molding process by a low-temperature injection, in which a polypropylene complex resin composition of the present invention is used as a base, and is simultaneously subjected to injection-compression with skin fabric.

It should be understood that the appended drawings are not necessarily to scale, presenting a somewhat simplified representation of various preferred features illustrative of the basic principles of the invention. The specific design features of the present invention as disclosed herein, including, for example, specific dimensions, orientations, locations, and shapes will be determined in part by the particular intended application and use environment.

In the figures, reference numbers refer to the same or equivalent parts of the present invention throughout the several figures of the drawing.

### DETAILED DESCRIPTION

Hereinafter reference will now be made in detail to various embodiments of the present invention, examples of which are illustrated in the accompanying drawings and described below. While the invention will be described in conjunction with exemplary embodiments, it will be understood that present description is not intended to limit the invention to those exemplary embodiments. On the contrary, the invention is intended to cover not only the exemplary embodiments, but also various alternatives, modifications, equivalents and other embodiments, which may be included within the spirit and scope of the invention as defined by the appended claims.

Various aspects of the present invention are directed to providing a polypropylene complex resin composition for low-temperature injection molding and a low-temperature injection molded article manufactured by using the same.

The polypropylene complex resin composition for low-temperature injection molding according to an exemplary embodiment of the present invention includes (A) a polypropylene resin, (B) an olefin-based elastomer, (C) an inorganic reinforcing agent, and (D) an additive. Each constituent component which constitutes the polypropylene complex resin composition for low-temperature injection molding according to an exemplary embodiment of the present invention will be described in more detail as follows.

### (A) Polypropylene Resin

The present invention includes (A-1) a high crystalline ethylene-propylene copolymer and (A-2) an ultrahigh fluidity homopolypropylene as a polypropylene resin.

(A-1) the high crystalline ethylene-propylene copolymer is a copolymer in which about 70 wt% to about 99 wt% (e.g., about 70 wt%, about 75 wt%, about 80 wt%, about 85 wt%, about 90 wt%, about 95 wt%, about 96 wt%, about 97 wt%, about 98 wt%, or about 99 wt%) of a propylene monomer and about 1 wt% to about 30 wt% (e.g., about 1 wt%, about 5 wt%, about 10 wt%, about 15 wt%, about 20 wt%, about 25 wt%, or about 30 wt%) of an ethylene monomer are polymerized. When the content of the ethylene monomer as a monomer constituting the high crystalline ethylene-propylene copolymer is less than 1 wt%, the impact resistance is reduced, and as a result, it may be difficult to use the ethylene monomer as a material for an interior part, and when the content is more than 30 wt%, the rigidity of a product is so poor that it may be difficult to use the monomer, so that the monomer is used within the range.

(A-1) the high crystalline ethylene-propylene copolymer has an isotactic index of 98 to 100%, meaning that the copolymer is highly crystalline, and has a melt flow index (MI) value in a range of 20 to 50 g/10 min (2.16 kg, 230°C). The isotactic index refers to an index of stereoregularity of the stereo configuration along the main chain of a polymer when stereoisomers are present in the main chain of the polymer. In general, a higher index of stereoregularity means that the stereo configuration is along the same direction, and as the high crystalline ethylene-propylene copolymer used in an exemplary embodiment of the present invention, those having an isotactic index of 98% to 100% (e.g., about 98%, 99%, or 100%) may be used. When the isotactic index of the high crystalline ethylene-propylene copolymer is less than 98%, the rigidity of a molded article may be low.

As for (A-1) the high crystalline ethylene-propylene copolymer, those having an MI value of about 20 g/10 min to 50 g/10 min (2.16 kg, 230°C) may be used. The reason is that when the MI value is less than 20 g/10 min, it is difficult to fill the inside of a mold with the copolymer during injection molding, and as a result, the moldability may not be good, and when the MI value is more than 50 g/10 min, the impact resistance is reduced, and as a result, it may be difficult for the copolymer to be used as a material for an interior part for a vehicle.

As for (A-2) the ultrahigh fluidity homopolypropylene, those having a narrow polydispersity index (PDI) of about 2 to 4 (e.g., about 2, 3, or 4) are used. When (A-2) the ultrahigh fluidity homopolypropylene has a low PDI value of less than 2, the processability and moldability may deteriorate.

As for (A-2) the ultrahigh fluidity homopolypropylene, those having a very high melt flow index value of about 1,000 g/10 min to 1,800 g/10 min (2.16 kg, 230°C) are used. This may be compared with the fact that a melt flow index (MI) value of a homopolypropylene for injection molding generally used is approximately 10 to 100 g/10 min (2.16 kg, 230°C). In an exemplary embodiment of the present invention, an ultrahigh fluidity homopolypropylene having an MI value of about 1,000 g/10 min to 1,800 g/10 min (2.16 kg, 230°C) as a homopolypropylene is selected and used in order to provide a polypropylene complex resin product capable of maintaining excellent moldability and appearance quality even under low-temperature injection conditions. As described above, the ultrahigh fluidity homopolypropylene is selected and used to improve the fluidity even in a low-temperature region and minimize a flow mark and a sink mark as an injection molding defect, thereby obtaining an effect of minimizing defects which may occur on the surface of fabric. At this time, there may be a problem in that when the MI value of the ultrahigh fluidity homopolypropylene is less than 1,000 g/10 min, it may be difficult to provide a target complex resin composition for low-temperature injection molding of the present invention, and conversely, when the MI value is more than 1,800 g/10 min, a large amount of gases are produced from an injection molded article and the MI of a complex PP cannot be adjusted.

In (A) the polypropylene resin constituting the complex resin composition of the present invention, (A-2) an ultrahigh fluidity homopolypropylene may be included in a content of about 5 to about 20 parts by weight (e.g., about 5 parts by weight, about 6, about 7, about 8, about 9, about 10, about 11, about 12, about 13, about 14, about 15, about 16, about 17, about 18, about 19, or about 20 parts by weight) based on 100 parts by weight of (A-1) the high crystalline ethylene-propylene copolymer. If the content of (A-2) the ultrahigh fluidity homopolypropylene is less than 5 parts by weight, it is not possible to provide a target complex resin composition for low-temperature injection molding of the present invention, and when the content is more than 20 parts by weight, a large amount of gases are produced during the injection and the MI of a complex PP cannot be adjusted.

(A) the polypropylene resin as described above may be included in a range of about 50 wt% to about 70 wt% (e.g., about 50 wt%, about 51 wt%, about 52 wt%, about 53 wt%, about 54 wt%, about 55 wt%, about 56 wt%, about 57 wt%, about 58 wt%, about 59 wt%, about 60 wt%, about 61 wt%, about 62 wt%, about 63 wt%, about 64 wt%, about 65 wt%, about 66 wt%, about 67 wt%, about 68 wt%, about 69 wt%, or about 70 wt%) in the complex resin composition of the present invention. When the content of (A) the polypropylene resin included in the complex resin composition of the present invention is less than 50 wt%, the impact strength may deteriorate, and when the content is more than 70 wt%, the rigidity deteriorates and parts may not be molded during the injection, so that the content may be maintained within the range.

### (B) Olefin-Based Elastomer

The present invention includes an olefin-based elastomer in order to reinforce impact resistance of the complex resin composition. As for the olefin-based elastomer, it is possible to use those having a Mooney viscosity in a range of about 1 to about 30 ML₁₊₄ (e.g., about 1 ML₁₊₄, about 2 ML₁₊₄, about 3 ML₁₊₄, about 5 ML₁₊₄, about 7 ML₁₊₄, about 9 ML₁₊₄, about 10 ML₁₊₄, about 15 ML₁₊₄, about 20 ML₁₊₄, about 23 ML₁₊₄, about 25 ML₁₊₄, about 27 ML₁₊₄, or about 30 ML₁₊₄) (ASTM D1646). As for the olefin-based elastomer, a problem may arise when the Mooney viscosity is less than 1 ML₁₊₄, the impact strength may be reduced due to reduction in molecular weight. And conversely, when the Mooney viscosity is more than 30 ML₁₊₄, the injection moldability becomes poor. More preferably, in the case of the olefin-based elastomer, those having a low Mooney viscosity of 1 to 10 ML₁₊₄ (e.g., about 1 ML₁₊₄, about 2 ML₁₊₄, about 3 ML₁₊₄, about 4 ML₁₊₄, about 5 ML₁₊₄, about 6 ML₁₊₄, about 7 ML₁₊₄, about 8 ML₁₊₄, about 9 ML₁₊₄, or about 10 ML₁₊₄) (ASTM D1646) are used.

The olefin-based elastomer may be a copolymer of an ethylene monomer and an alpha olefin monomer having a carbon number of 4 to 10. At this time, the alpha olefin monomer may include butane, pentene, hexane, propene, octene, and the like, and those having a long side chain are preferred because an impact resistance reinforcing effect at a low temperature may be more particular. The olefin-based elastomer may specifically include one or more selected from the group consisting of ethylene-butene rubber (EBR), ethylene-hexene rubber (EHR), and ethylene-octene rubber (EOR).

(B) The olefin-based elastomer as described above may be included in a range of 10 wt% to 20 wt% (e.g., about 10 wt%, about 11 wt%, about 12 wt%, about 13 wt%, about 14 wt%, about 15 wt%, about 16 wt%, about 17 wt%, about 18 wt%, about 19 wt%, or about 20 wt%) in the complex resin composition of the present invention. When the content of (B) the olefin-based elastomer included in the complex resin composition of the present invention is less than 10 wt%, the soft texture and low-temperature impact resistance may deteriorate, and when the content is more than 20 wt%, the rigidity may be reduced and the fluidity may significantly deteriorate, so that it is preferred that the content is maintained in the range.

### (C) Inorganic Reinforcing Agent

The present invention includes an inorganic reinforcing agent in order to reinforce the dimensional stability and the heat resistance and improve the productivity. The inorganic reinforcing agent may include one or more selected from the group consisting of talc, mica, whisker, calcium carbonate, barium sulfate, calcium carbonate, and glass bubble. The inorganic reinforcing agent is an inorganic reinforcing agent having a layered structure selected from talc and mica, and it is more preferred to include an inorganic reinforcing agent having a particle size of 1 µm to 15 µm (e.g., about 1 µm, about 3 µm, about 5 µm, about 7 µm, about 10 µm, about 12 µm, or about 15 µm). Particularly preferably, when the inorganic reinforcing agent includes a layered structure having a particle size of 3 µm to 6 µm (e.g., 3 µm, 4 µm, 5 µm, or 6 µm), it is possible to obtain a more preferred effect in implementing physical properties required for a vehicle interior material.

(C) The inorganic reinforcing agent as described above may be included in a range of about 1 wt% to about 20 wt% (e.g., about 1 wt%, about 2 wt%, about 3 wt%, about 4 wt%, about 5 wt%, about 6 wt%, about 7 wt%, about 8 wt%, about 9 wt%, about 10 wt%, about 11 wt%, about 12 wt%, about 13 wt%, about 14 wt%, about 15 wt%, about 16 wt%, about 17 wt%, about 18 wt%, about 19 wt%, or about 20 wt%) in the complex resin composition of the present invention. There may be problem in that when the content of (C) the inorganic reinforcing agent included in the complex resin composition of the present invention is less than 1 wt%, the dimensional stability may deteriorate, and when the content is more than 20 wt%, the entire soft feel of the molded article deteriorates, so that it is preferred that the content is maintained in the range.

### (D) Additive

The present invention may include one or more selected from the group consisting of an antioxidant, a UV absorbent, a nucleating agent, a coupling agent, a dispersing agent, a processing lubricant, a slip agent, and an inorganic pigment as a typical additive. In an exemplary embodiment of the present invention, the selection of these additives is not particularly limited. Furthermore, the additive may be included appropriately in a range of 1 to 10 wt% in the complex resin composition of the present invention.

The polypropylene complex resin composition according to an exemplary embodiment of the present invention as described above is characterized to be capable of being injected at a low temperature of about 180°C to about 200°C (e.g., about 180°C, about 185°C, about 190°C, about 195°C, or about 200°C). That is, the polypropylene complex resin composition according to an exemplary embodiment of the present invention has a melt flow index (MI) value of about 20 g/10 min to 30 g/10 min (e.g., about 20 g/10 min, about 25 g/10 min, or about 30 g/10 min) measured at 200°C and under a load condition of 2.16 kg, and a spiral flow value of about 500 mm to about 800 mm (e.g., about 500 mm, about 525 mm, about 550 mm, about 575 mm, about 600 mm, about 625 mm, about 650 mm, about 675 mm, about 700 mm, about 725 mm, about 750 mm, about 775 mm, or about 800 mm) in accordance with a 200°C injection reference.

In comparison with that fact that a typical polypropylene complex resin composition has a melt flow index (MI) value of approximately 10 g/10 min to 15 g/10 min measured at 200°C and under a load condition of 2.16 kg, and a spiral flow value of 300 to 450 mm in accordance with a 200°C injection reference, the polypropylene complex resin composition according to an exemplary embodiment of the present invention has improved effects.

Accordingly, the polypropylene complex resin composition provided by the present invention enables integral molding with soft skin fabric, and as a result, it is possible to expect a process simplification effect and a cost reduction effect.

FIG. 1 is a process view illustrating an integral molding process in which injection-compression is simultaneously performed on skin fabric and a polypropylene complex resin composition. According to FIG. 1, a molded article with skin fabric and a base integrated may be manufactured by allowing preheated skin fabric to settle at the top of a mold, and injecting and simultaneously compressing a polypropylene complex resin composition as a base. In the integral molding process, a twin-screw extruder with a diameter of 40 mm and L/D 52 may be used, and the injection and compression temperature as the process conditions may be maintained at 190°C to 210°C. A molded article which may be manufactured by the aforementioned integral molding process may specifically include an interior part for a vehicle, selected from the group consisting of a door trim, a filler, a trunk mat, a package trim, and a headliner.

The present invention as described above will be described in more detail with reference to the following Examples, and the present invention is not limited thereto.

### EXAMPLES

The following examples illustrate the invention and are not intended to limit the same.

A polypropylene complex resin composition was prepared by blending composition components at the content ratio shown in the following Tables 1 and 2.

At this time, the composition components used are as follows. Furthermore, a sample was manufactured from the prepared polypropylene complex resin composition, and physical properties were measured by the following method for measuring physical properties.

### Composition Component

### Polypropylene Resin

(A-1) High Crystalline Ethylene-Propylene Copolymer (Isotactic index of 98 to 100%; MI value of 30 g/10 min, 2.16 kg, 230°C; ethylene content 3 to 7 wt%)
(A-2) Ultrahigh Fluidity Homopolypropylene (MI value of 1,200 g/10 min, 2.16 kg, 230°C; PDI value of 2 to 4)
(A-3) Ethylene-Propylene Copolymer (Isotactic index of 94 to 97%; MI value of 30 g/10 min, 2.16 kg, 230°C)
(A-4) Homopolypropylene (MI value of 800 g/10 min, 2.16 kg, 230°C; PDI value of 4 to 8)

### Olefin-Based Elastomer

(B-1) Ethylene-Octene Rubber (EOR), Mooney viscosity of 20 to 30 ML₁₊₄ (ASTM D1646)
(B-2) Ethylene-Octene Rubber (EOR), Mooney viscosity of 1 to 10 ML₁₊₄ (ASTM D1646)

### Inorganic Reinforcing Agent

(C-1) Layered Talc, Particle Size of 6 to 12 µm
(C-2) Layered Talc, Particle Size of 3 to 6 µm

### Additive

(D-1) Antioxidant (Hindered phenol-based)
(D-2) UV absorbent (Hindered piperidine-based)
(D-3) Nucleating Agent (Phosphate-based)
(D-4) Dispersing Agent (octadecanoic acid)

### (2) Method for Measuring Physical Properties of Sample

A method for measuring physical properties of the polypropylene complex resin composition prepared is as follows.

Melt Flow Index (MI, g/10 min): measured in accordance with ASTM D 1238 at a temperature of 200°C and under a load condition of 2.16 kg.

Specific Weight: measured in accordance with ASTM D 792.

Elongation and Tensile Strength: measured in accordance with ASTM D 638 (sample thickness 3 mm, 23°C).

Flexural Modulus: measured in accordance with ASTM D 790 (sample thickness 6 mm, 23°C).

Impact Strength (NOTCHED IZOD, J/m): measured in accordance with ASTM D 256 (sample thickness 6 mm, 23°C).

Spiral Flow: injected while being stirred under a condition of 250 rpm to 350 rpm in a temperature interval of 190°C to 210°C by using a twin-screw extruder with a diameter of 40 mm and L/D 52.

### TEST EXAMPLES

### Examples 1 and 2 and Comparative Examples 1 to 3.

The Examples and the Comparative Examples are intended to select an optimal polypropylene mixed resin. Examples 1 and 2 are a composition including (A-1) a high crystalline ethylene-propylene copolymer and (A-2) an ultrahigh fluidity homopolypropylene as a polypropylene resin. In addition, Comparative Examples 1 to 3 are a composition including (A-3) a non-crystalline ethylene-propylene copolymer or (A-4) a low fluidity homopolypropylene as a polypropylene resin.

**[Table 1]**

| Classification | | | Example | | Comparative Example | | |
|---|---|---|---|---|---|---|---|
| | | | 1 | 2 | 1 | 2 | 3 |
| Composition | (A) | (A-1) | 68 | 63 | - | - | 63 |
| | | (A-2) | 5 | 10 | 5 | 10 | - |
| | | (A-3) | - | - | 68 | 63 | - |
| | | (A-4) | - | - | - | - | 10 |
| | (B-1) | | 10 | 10 | 10 | 10 | 10 |
| | (C) | | 15 | 15 | 15 | 15 | 15 |
| | (D) | | 2 | 2 | 2 | 2 | 2 |
| | Total content (wt%) | | 100 | 100 | 100 | 100 | 100 |
| Physical properties | MI (200°C, g/10 min) | | 22.4 | 28.5 | 21.1 | 26.9 | 23.2 |
| | Specific weight | | 1.00 | 1.00 | 1.00 | 1.00 | 1.00 |
| | Elongation (%) | | 285 | 287 | 280 | 287 | 285 |
| | Tensile strength (MPa) | | 26.8 | 27.2 | 22.1 | 23.4 | 27.0 |
| | Flexural modulus (MPa) | | 1810 | 1980 | 11550 | 1620 | 1940 |
| | IZOD Impact strength | Room temperature (J/m) | 81.8 | 72.7 | 62.1 | 58.5 | 74.4 |
| | | Low temperature (J/m) | 42.1 | 41.5 | 38.4 | 34.3 | 41.8 |
| | Spiral flow (mm) | | 580 | 645 | 565 | 620 | 595 |

According to the results in Table 1, it can be confirmed that the polypropylene complex resin compositions including (A-1) a high crystalline ethylene-propylene copolymer and (A-2) an ultrahigh fluidity homopolypropylene at an appropriate composition ratio as a polypropylene resin in Examples 1 and 2 had a melt flow index (MI) value in a range of 20 to 30 g/10 min measured at 200°C and under a load condition of 2.16 kg and a spiral flow value of 500 to 800 mm, and all the physical properties such as impact strength are excellent.

In contrast, it can be confirmed that the polypropylene complex resin compositions including (A-3) a crystalline ethylene-propylene copolymer instead of (A-1) a high crystalline ethylene-propylene copolymer in the polypropylene resin in Comparative Examples 1 and 2 had a flexural modulus, a tensile strength, and an impact strength, which were all low as compared to (A-1).

It can also be confirmed that the polypropylene complex resin composition including (A-4) a low fluidity homopolypropylene instead of (A-2) an ultrahigh fluidity homopolypropylene in the polypropylene resin in Comparative Example 3 had all the physical properties, such as impact strength similar to those in the polypropylene complex resin composition including (A-1), but had the spiral flow value which was lower than that in Example 2.

### Examples 3 to 7

These Examples are provided to confirm an effect obtained by selectively adding (B) an olefin-based elastomer and (C) an inorganic reinforcing agent include in (A) a polypropylene mixed resin as a component included in the polypropylene complex resin composition.

**[Table 2]**

| Classification | | | Example 2 | Example | | | | |
|---|---|---|---|---|---|---|---|---|
| | | | | 3 | 4 | 5 | 6 | 7 |
| Composition | (A) | (A-1) | 63 | 63 | 58 | 58 | 58 | 53 |
| | | (A-2) | 10 | 10 | 10 | 10 | 10 | 10 |
| | (B) | (B-1) | 10 | 10 | 10 | 15 | - | - |
| | | (B-2) | - | - | - | - | 10 | 15 |
| | (C) | (C-1) | 15 | - | - | - | - | - |
| | | (C-1) | - | 15 | 20 | 20 | 20 | 20 |
| | (D) | | 2 | 2 | 2 | 2 | 2 | 2 |
| | Total content (wt%) | | 100 | 100 | 100 | 100 | 100 | 100 |
| Physical properties | MI (200°C, g/10 min) | | 28.5 | 28.8 | 28.3 | 25.1 | 34.8 | 36.2 |
| | Specific weight (g/cm³) | | 1.00 | 1.00 | 1.04 | 1.04 | 1.04 | 1.04 |
| | Elongation (%) | | 287 | 290 | 288 | 301 | 294 | 308 |
| | Tensile strength (MPa) | | 27.2 | 29.1 | 30.4 | 28.9 | 30.2 | 29.1 |
| | Flexural modulus (MPa) | | 1980 | 2010 | 2190 | 2120 | 2200 | 2135 |
| | IZOD Impact strength | Room temperature (J/m) | 72.7 | 76.5 | 77.1 | 91.5 | 71.2 | 90.8 |
| | | Low temperature (J/m) | 41.5 | 42.1 | 42.5 | 55.4 | 38.4 | 50.9 |
| | Spiral flow (mm) | | 645 | 650 | 645 | 620 | 770 | 785 |

According to the results in Table 2, it can be confirmed that in the case of the polypropylene complex resin compositions including a small layered talc having a particle size of 3 to 6 µm as (C) an inorganic reinforcing agent in Examples 3 to 5, an effect of improving physical properties such as tensile strength and impact strength was obtained as compared to the complex resin composition in Example 2.

It can also be confirmed that in the case of the polypropylene complex resin compositions that selectively used an ethylene-octene rubber (EOR) having a low Mooney viscosity of 1 to 10 ML₁₊₄ (ASTM D1646) as (B) an olefin-based elastomer in Examples 6 and 7, not only an effect of improving physical properties such as tensile strength and impact strength, but also an effect in which a melt flow index (MI) value measured at 200°C and a spiral flow value were significantly improved were obtained as compared to the complex resin composition in Example 2.

The foregoing descriptions of specific exemplary embodiments of the present invention have been presented for purposes of illustration and description. They are not intended to be exhaustive or to limit the invention to the precise forms disclosed, and obviously many modifications and variations are possible in light of the above teachings. The exemplary embodiments were chosen and described in order to explain certain principles of the invention and their practical application, to enable others skilled in the art to make and utilize various exemplary embodiments of the present invention, as well as various alternatives and modifications thereof. It is intended that the scope of the invention be defined by the Claims appended hereto and their equivalents.

## Claims

1. A polypropylene complex resin composition for low-temperature injection molding, comprising:
(A) a polypropylene resin;
(B) an olefin-based elastomer;
(C) an inorganic reinforcing agent; and
(D) an additive,
wherein (A) the polypropylene resin is a polypropylene mixed resin comprising:
about 100 parts by weight of (A-1) a high-crystalline ethylene-propylene copolymer having an isotactic index of about 98 to 100% and a melt flow index value of about 20 to 50 g/10 min (2.16 kg, 230°C); and
about 5 to 20 parts by weight of (A-2) an ultrahigh fluidity homopolypropylene having a melt flow index value of about 1,000 to 1,800 g/10 min (2.16 kg, 230°C).

2. The polypropylene complex resin composition of claim 1, wherein (A-1) the high crystalline ethylene-propylene copolymer is a copolymer in which about 70 to 99 wt% of a propylene monomer and about 1 to 30 wt% of an ethylene monomer are copolymerized.

3. The polypropylene complex resin composition of claim 1 or 2, wherein (A-2) the ultrahigh fluidity homopolypropylene has a polydispersity index (PDI) of about 2 to 4.

4. The polypropylene complex resin composition of any one of claims 1 to 3, wherein (B) the olefin-based elastomer has a Mooney viscosity in a range of about 1 to 30 ML₁₊₄ (ASTM D1646).

5. The polypropylene complex resin composition of any one of claims 1 to 4, wherein (B) the olefin-based elastomer is one or more selected from the group consisting of ethylene-butene rubber (EBR), ethylene-hexene rubber (EHR), and ethylene-octene rubber (EOR).

6. The polypropylene complex resin composition of any one claims 1 to 5, wherein (C) the inorganic reinforcing agent is one or more selected from the group consisting of talc, mica, whisker, calcium carbonate, barium sulfate, calcium carbonate, and glass bubble.

7. The polypropylene complex resin composition of claim 6, wherein (C) the inorganic reinforcing agent is selected from talc and mica, is a material having a layered structure, and has a particle size of about 1 µm to 15 µm.

8. The polypropylene complex resin composition of any one of claims 1 to 7, wherein (D) the additive is one or more selected from the group consisting of an antioxidant, a UV absorbent, a nucleating agent, a coupling agent, a dispersing agent, a processing lubricant, a slip agent, and an inorganic pigment.

9. The polypropylene complex resin composition of claim 1, wherein the polypropylene complex resin composition comprises:
about 50 to 70 wt% of (A) a polypropylene resin;
about 10 to 20 wt% of (B) an olefin-based elastomer;
about 1 to 20 wt% of (C) an inorganic reinforcing agent; and
about 1 to 10 wt% of (D) an additive.

10. The polypropylene complex resin composition of any one of claims 1 to 9, wherein the polypropylene complex resin composition has a melt flow index (MI) value of about 20 to 30 g/10 min at 200°C and under a load condition of 2.16 kg.

11. The polypropylene complex resin composition of any one of claims 1 to 10, wherein the polypropylene complex resin composition has a spiral flow value of about 500 to 800 mm in accordance with a 200°C injection reference.

12. The polypropylene complex resin composition of claim 1, wherein the polypropylene complex resin composition comprises:
about 50 to 70 wt% of (A) a polypropylene resin comprising:
about 100 parts by weight of (A-1) a high-crystalline ethylene-propylene copolymer having an isotactic index of about 98 to 100% and a melt flow index value of about 20 to 50 g/10 min (2.16 kg, 230°C); and
about 5 to 20 parts by weight of (A-2) an ultrahigh fluidity homopolypropylene having a melt flow index value of 1,000 to 1,800 g/10 min (2.16 kg, 230°C);
about 10 to 20 wt% of (B) an olefin-based elastomer having a Mooney viscosity of 1 to 10 ML₁₊₄ (ASTM D1646);
about 1 to 20 wt% of (C) a layered inorganic reinforcing agent having a particle size of 3 to 6 µm; and
about 1 to 10 wt% of (D) one or more additives selected from the group consisting of an antioxidant, a UV absorbent, a nucleating agent, a coupling agent, a dispersing agent, a processing lubricant, a slip agent, and an inorganic pigment, and
the polypropylene complex resin composition has a melt flow index (MI) value measured at 200°C and under a load condition of 2.16 kg of about 20 to 30 g/10 min, and a spiral flow value in accordance with a 200°C injection reference of about 500 to 800 mm.

13. A low-temperature injection molded article which the polypropylene complex resin composition of any one of claims 1 to 12 is injection-molded under a low temperature condition of about 180°C to 200°C.

14. The low-temperature injection molded article of claim 13, wherein the polypropylene complex resin composition is injection-molded by an integral molding process in which the polypropylene complex resin composition is simultaneously subjected to injection-compression with skin fabric.

15. The low-temperature injection molded article of claim 14, wherein the skin fabric is fabric formed of a thermoplastic resin material.

16. The low-temperature injection molded article of claim 13 to 15, wherein the molded article is an interior part for a vehicle selected from the group consisting of a door trim, a filler, a trunk mat, a package trim, and a headliner.

## Patentansprüche

1. Eine Polypropylenkomplex-Harzzusammensetzung zum Niedrigtemperatur-Spritzgießen, aufweisend:
(A) ein Polypropylenharz;
(B) ein olefinbasiertes Elastomer,
(C) ein anorganisches Verstärkungsmittel und
(D) ein Additiv,
wobei (A) das Polypropylenharz ein Polypropylen-Mischharz ist, aufweisend:
etwa 100 Gewichtsteile von (A-1) einem hochkristallinen Ethylen-Propylen-Copolymer mit einem isotaktischen Index von etwa 98 bis 100% und einem Schmelzflussindexwert von etwa 20 bis 50 g/10 min (2,16 kg, 230°C), und
etwa 5 bis 20 Gewichtsteile von (A-2) einem ultrahohe-Fließfähigkeit-Homopolypropylen mit einem Schmelzflussindexwert von etwa 1000 bis 1800 g/10 min (2,16 kg, 230°C) .

2. Die Polypropylenkomplex-Harzzusammensetzung gemäß Anspruch 1, wobei (A-1) das hochkristalline Ethylen-Propylen-Copolymer ein Copolymer ist, in dem etwa 70 bis 99 Gew.-% eines Propylen-Monomers und etwa 1 bis 30 Gew.-% eines Ethylen-Monomers copolymerisiert sind.

3. Die Polypropylenkomplex-Harzzusammensetzung gemäß Anspruch 1 oder 2, wobei (A-2) das ultrahohe-Fließfähigkeit-Homopolypropylen einen Polydispersitätsindex (PDI) von etwa 2 bis 4 hat.

4. Die Polypropylenkomplex-Harzzusammensetzung gemäß irgendeinem der Ansprüche 1 bis 3, wobei (B) das olefinbasierte Elastomer eine Mooney-Viskosität in einem Bereich von etwa 1 bis 30 ML₁₊₄ (ASTM D1646) hat.

5. Die Polypropylenkomplex-Harzzusammensetzung gemäß irgendeinem der Ansprüche 1 bis 4, wobei (B) das olefinbasierte Elastomer eines oder mehrere ist, die aus der Gruppe bestehend aus Ethylen-Buten-Gummi (EBR), Ethylen-Hexen-Gummi (EHR) und Ethylen-Octen-Gummi (EOR) ausgewählt sind.

6. Die Polypropylenkomplex-Harzzusammensetzung gemäß irgendeinem der Ansprüche 1 bis 5, wobei (C) das anorganische Verstärkungsmittel eines oder mehrere ist, die aus der Gruppe bestehend aus Talk, Glimmer, Whisker, Calciumcarbonat, Bariumsulfat, Calciumcarbonat und Glasblase ausgewählt sind.

7. Die Polypropylenkomplex-Harzzusammensetzung gemäß Anspruch 6, wobei (C) das anorganische Verstärkungsmittel aus Talk und Glimmer ausgewählt ist, ein Material mit einer Schichtstruktur ist und eine Partikelgröße von etwa 1 µm bis 15 µm hat.

8. Die Polypropylenkomplex-Harzzusammensetzung gemäß irgendeinem der Ansprüche 1 bis 7, wobei (D) das Additiv eines oder mehrere ist, die aus der Gruppe bestehend aus einem Antioxidans, einem UV-Absorbens, einem Nukleierungsmittel, einem Kopplungsmittel, einem Dispergiermittel, einem Verarbeitungsschmiermittel, einem Gleitmittel und einem anorganischen Pigment ausgewählt sind.

9. Die Polypropylenkomplex-Harzzusammensetzung gemäß Anspruch 1, wobei die Polypropylenkomplex-Harzzusammensetzung aufweist:
etwa 50 bis 70 Gew.-% von (A) einem Polypropylenharz,
etwa 10 bis 20 Gew.-% von (B) einem olefinbasierten Elastomer,
etwa 1 bis 20 Gew.-% von (C) einem anorganischen Verstärkungsmittel, und
etwa 1 bis 10 Gew.-% von (D) einem Additiv.

10. Die Polypropylenkomplex-Harzzusammensetzung gemäß irgendeinem der Ansprüche 1 bis 9, wobei die Polypropylenkomplex-Harzzusammensetzung einen Schmelzflussindex- (MI) -Wert von etwa 20 bis 30 g/10 min bei 200°C und unter einer Belastungsbedingung von 2,16 kg hat.

11. Die Polypropylenkomplex-Harzzusammensetzung gemäß irgendeinem der Ansprüche 1 bis 10, wobei die Polypropylenkomplex-Harzzusammensetzung einen Spiralflusswert von etwa 500 bis 800 mm gemäß einer 200°C - Spritzreferenz hat.

12. Die Polypropylenkomplex-Harzzusammensetzung gemäß Anspruch 1, wobei die Polypropylenkomplex-Harzzusammensetzung aufweist:
etwa 50 bis 70 Gew.-% von (A) einem Polypropylenharz, aufweisend:
etwa 100 Gewichtsteile von (A-1) einem hochkristallinen Ethylen-Propylen-Copolymer mit einem isotaktischen Index von etwa 98 bis 100% und einem Schmelzflussindexwert von etwa 20 bis 50 g/10 min (2,16 kg, 230°C), und
etwa 5 bis 20 Gewichtsteile von (A-2) einem ultrahohe-Fließfähigkeit-Homopolypropylen mit einem Schmelzflussindexwert von etwa 1000 bis 1800 g/10 min (2,16 kg, 230°C),
etwa 10 bis 20 Gew.-% von (B) einem olefinbasierten Elastomer mit einer Mooney-Viskosität von 1 bis 10 ML₁₊₄ (ASTM D1646);
etwa 1 bis 20 Gew.-% von (C) einem Schichtanorganischen Verstärkungsmittel mit einer Partikelgröße von 3 bis 6 µm, und
etwa 1 bis 10 Gew.-% von (D) einem oder mehreren Additiven, die aus der Gruppe bestehend aus einem Antioxidans, einem UV-Absorbens, einem Nukleierungsmittel, einem Kopplungsmittel, einem Dispergiermittel, einem Verarbeitungsschmiermittel, einem Gleitmittel und einem anorganischen Pigment ausgewählt sind, und
die Polypropylenkomplex-Harzzusammensetzung einen Schmelzflussindex- (MI) -Wert gemessen bei 200°C und unter einer Belastungsbedingung von 2,16 kg von etwa 20 bis 30 g/10 min und einen Spiralflusswert gemäß einer 200°C - Spritzreferenz von etwa 500 bis 800 mm hat.

13. Ein Niedrigtemperatur-Spritzgießartikel, bei dem die Polypropylenkomplex-Harzzusammensetzung gemäß irgendeinem der Ansprüche 1 bis 12 unter einer Niedrigtemperaturbedingung von etwa 180°C bis 200°C spritzgegossen wird.

14. Der Niedrigtemperatur-Spritzgießartikel gemäß Anspruch 13, wobei die Polypropylenkomplex-Harzzusammensetzung durch ein integrales Formverfahren spritzgegossen wird, bei dem die Polypropylenkomplex-Harzzusammensetzung gleichzeitig einem Spritzprägen mit Hautstoff unterzogen wird.

15. Der Niedrigtemperatur-Spritzgießartikel gemäß Anspruch 14, wobei der Hautstoff ein Stoff ist, der aus einem thermoplastischen Harzmaterial gebildet ist.

16. Der Niedrigtemperatur-Spritzgießartikel gemäß Anspruch 13 bis 15, wobei der geformte Artikel ein Innenteil für ein Fahrzeug ist, das aus der Gruppe bestehend aus einer Türverkleidung, einem Füllstoff, einer Kofferraummatte, einer Gehäuseverkleidung und einem Dachhimmel ausgewählt ist.

## Revendications

1. Composition de résine complexe de polypropylène pour moulage par injection à basse température, comprenant :
(A) une résine de polypropylène ;
(B) un élastomère à base d'oléfine ;
(C) un agent de renforcement inorganique ; et
(D) un additif,
dans laquelle la résine de polypropylène (A) est une résine mixte de polypropylène comprenant :
environ 100 parties en poids de (A-1) un copolymère d'éthylène-propylène hautement cristallin ayant un indice d'isotacticité d'environ 98 à 100 % et une valeur d'indice de fluage d'environ 20 à 50 g/10 min (2,16 kg, 230°C) ; et
environ 5 à 20 parties en poids de (A-2) un homopolymère de fluidité ultra élevée ayant une valeur d'indice de fluage d'environ 1000 à 1800 g/10 min (2,16 kg, 230°C).

2. Composition de résine complexe de polypropylène selon la revendication 1, dans laquelle le copolymère d'éthylène-propylène hautement cristallin (A-1) est un copolymère dans lequel environ 70 à 99 % en poids d'un monomère de propylène et environ 1 à 30 % en poids d'un monomère d'éthylène sont copolymérisés.

3. Composition de résine complexe de polypropylène selon la revendication 1 ou 2, dans laquelle l'homopolymère de fluidité ultra élevée (A-2) a un indice de polydispersité (PDI) d'environ 2 à 4.

4. Composition de résine complexe de polypropylène selon l'une quelconque des revendications 1 à 3, dans laquelle l'élastomère à base d'oléfine (B) a une viscosité Mooney située dans la plage allant d'environ 1 à 30 ML₁₊₄ (ASTM D1646).

5. Composition de résine complexe de polypropylène selon l'une quelconque des revendications 1 à 4, dans laquelle l'élastomère à base d'oléfine (B) est un ou plusieurs choisis dans le groupe constitué par un caoutchouc d'éthylène-butène (EBR), un caoutchouc d'éthylène-hexène (EHR), et un caoutchouc d'éthylène-octène (EOR).

6. Composition de résine complexe de polypropylène selon l'une quelconque des revendications 1 à 5, dans laquelle l'agent de renforcement inorganique (C) est un ou plusieurs choisis dans le groupe constitué par le talc, le mica, les barbes, le carbonate de calcium, le sulfate de baryum, le carbonate de calcium, et les bulles de verre.

7. Composition de résine complexe de polypropylène selon la revendication 6, dans laquelle l'agent de renforcement inorganique (C) est choisi parmi le talc et le mica, est un matériau ayant une structure lamellaire, et a une granulométrie d'environ 1 µm à 15 µm.

8. Composition de résine complexe de polypropylène selon l'une quelconque des revendications 1 à 7, dans laquelle l'additif (D) est un ou plusieurs choisis dans le groupe constitué par un antioxydant, un agent absorbant les UV, un agent de nucléation, un agent de couplage, un agent de dispersion, un lubrifiant de traitement, un agent de glissement, et un pigment inorganique.

9. Composition de résine complexe de polypropylène selon la revendication 1, laquelle composition de résine complexe de polypropylène comprend :
environ 50 à 70 % en poids d'une résine de polypropylène (A) ;
environ 10 à 20 % en poids d'un élastomère à base d'oléfine (B) ;
environ 1 à 20 % en poids d'un agent de renforcement inorganique (C) ; et
environ 1 à 10 % en poids d'un additif (D).

10. Composition de résine complexe de polypropylène selon l'une quelconque des revendications 1 à 9, laquelle composition de résine complexe de polypropylène a une valeur d'indice de fluage (MI) d'environ 20 à 30 g/10 min à 200°C et sous une condition de charge de 2,16 kg.

11. Composition de résine complexe de polypropylène selon l'une quelconque des revendications 1 à 10, laquelle composition de résine complexe de polypropylène a une valeur d'écoulement en spirale d'environ 500 à 800 mm conformément à une référence d'injection à 200°C.

12. Composition de résine complexe de polypropylène selon la revendication 1, laquelle composition de résine complexe de polypropylène comprend :
environ 50 à 70 % en poids d'une résine de polypropylène (A) comprenant :
environ 100 parties en poids de (A-1) un copolymère d'éthylène-propylène hautement cristallin ayant un indice d'isotacticité d'environ 98 à 100 % et une valeur d'indice de fluage d'environ 20 à 50 g/10 min (2,16 kg, 230°C) ; et
environ 5 à 20 parties en poids de (A-2) un homopolymère de fluidité ultra élevée ayant une valeur d'indice de fluage d'environ 1000 à 1800 g/10 min (2,16 kg, 230°C) ;
environ 10 à 20 % d'un élastomère à base d'oléfine (B) ayant une viscosité Mooney de 1 à 10 ML₁₊₄ (ASTM D1646) ;
environ 1 à 20 % en poids d'un agent de renforcement inorganique lamellaire (C) ayant une granulométrie de 3 à 6 µm ; et
environ 1 à 10 % en poids d'un ou plusieurs additifs (D) choisis dans le groupe constitué par un antioxydant, un agent absorbant les UV, un agent de nucléation, un agent de couplage, un agent de dispersion, un lubrifiant de traitement, un agent de glissement, et un pigment inorganique ; et
laquelle composition de résine complexe de polypropylène a une valeur d'indice de fluage (MI) mesurée à 200°C et sous une condition de charge de 2,16 kg d'environ 20 à 30 g/10 min, et une valeur d'écoulement en spirale conformément à une référence d'injection à 200°C d'environ 500 à 800 mm.

13. Article moulé par injection à basse température dans lequel la composition de résine complexe de polypropylène de l'une quelconque des revendications 1 à 12 est moulé par injection dans une condition de basse température d'environ 180°C à 200°C.

14. Article moulé par injection à basse température selon la revendication 13, dans lequel la composition de résine complexe de polypropylène est moulée par injection par un procédé de moulage intégral dans lequel la composition de résine complexe de polypropylène est simultanément soumise à une injection-compression avec une étoffe de peau.

15. Article moulé par injection à basse température selon la revendication 14, dans lequel l'étoffe de peau est une étoffe formée d'un matériau en résine thermoplastique.

16. Article moulé par injection à basse température selon les revendications 13 à 15, lequel article moulé est une pièce d'intérieur pour un véhicule choisie dans le groupe constitué par un habillage de portière, une garniture, un tapis de coffre, un habillage d'ensemble, et une garniture de pavillon.
